# FASCICULE DE BREVET EUROPEEN

(11) **EP 1 143 691 B1**
(45) Date de publication et mention de la délivrance du brevet: **31.08.2016**
(21) Numéro de dépôt: 01400839.5
(22) Date de dépôt: 03.04.2001
(51) Int. Cl.: H04M 11/06, H04M 1/247, H04M 1/725, H04W 4/00, G06F 17/30, H04W 4/02, H04W 8/26, H04W 74/00, H04M 1/2745

(54) **Système visant à simplifier l'accès et l'utilisation de services internet depuis un terminal mobile**
System für die Vereinfachung des Zugriffs und des Gebrauches von Internet-Diensten mit einem mobilen Terminal
System for simplifying the access and the use of internet services from a mobile terminal

(30) Priorité: 05.04.2000 FR 0004342; 28.09.2000 FR 0012328
(43) Date de publication de la demande: 10.10.2001
(73) Titulaire: Microsoft Research & Development France S.A.S., 75014 Paris (FR)
(72) Inventeur: Marot, Emmanuel, 75004 Paris (FR); Anquetil, Gilles, 92120 Montrouge (FR)
(74) Mandataire: Fischer, Michael Maria

(56) Documents cités:
- EP-A- 0 732 646
- WO-A-99/22488
- US-A- 5 797 098
- US-A- 5 818 437

## Description

La présente invention concerne un dispositif destiné à faciliter l'accès à un Service Internet ainsi que son utilisation depuis un terminal dépourvu d'un clavier complet. L'accès direct à un Service Internet s'obtient généralement par la saisie de l'adresse Internet du site correspondant, dénommée URL (Universal Resource Locator). Cette adresse est fastidieuse à saisir sur des terminaux ne possédant pas un clavier alphanumérique complet, tels que les terminaux Internet mobiles (voir WO9922488 A).

La présente invention consiste à simplifier cet accès à un Service de type Internet, en faisant correspondre un nom ou une séquence de saisie simplifiée de ce nom avec l'adresse Internet réelle d'un Service puis à rediriger l'utilisateur vers celle-ci. La présente invention donne également l'occasion de saisir par le même moyen, et préalablement à l'accès au Service, des paramètres complémentaires qui seront transmis à celui-ci, de manière à préciser l'information recherchée sur ce Service.

Depuis son terminal, l'utilisateur ne saisit que le nom du Service auquel il souhaite accéder, et non l'adresse Internet complète. Il est également possible de n'appuyer qu'une fois sur les touches correspondant à la suite de lettres formant le nom du Service. La saisie peut être effectuée grâce au clavier physique du terminal, ou bien grâce à un clavier affiché sur un écran tactile, dont la disposition des touches peut varier d'un terminal à l'autre. Le ou les Service(s) correspondant(s) au nom ou à la séquence entrée par l'utilisateur sont déterminés par la comparaison, sur un serveur distant et au sein de une ou plusieurs bases de données, du nom ou de la séquence saisie par l'utilisateur avec le nom ou la séquence correspondant aux Services référencés dans un groupe ci-après dénommé dictionnaire. La résolution de la requête peut s'effectuer sur un ou plusieurs dictionnaires, soit de manière simultanée, soit de manière séquentielle, le choix et l'ordre de ces dictionnaires étant déterminés selon les conditions d'utilisation suivantes : localisation géographique de l'utilisateur, langue utilisée, modèle et constructeur du terminal utilisé, langages informatiques et standards compatibles avec le terminal, fournisseur par lequel s'effectue l'accès à Internet, Portail Internet sur lequel se situe l'utilisateur au moment de la requête.

La saisie de paramètres s'effectue par le même mode, étant séparée du nom du Service ou de sa séquence correspondante par une touche ou une action prédéfinie, ci-après nommée Séparateur. L'invention permet de combiner un nombre indéfini de noms et de paramètres, distingués à chaque fois par un
Séparateur. L'ensemble de la requête est envoyé au serveur. Une fois le nom du Service résolu, les paramètres peuvent être soit résolus à leur tour au sein de dictionnaires secondaires au Service, soit transmis au site Internet du Service lors de la re-direction de l'utilisateur, afin que l'utilisateur accède à l'information désirée, notamment à une sous-partie du site en question.

En cas d'ambiguïté, du fait que plusieurs lettres peuvent être attribuées à une même touche ou bien si plusieurs réponses existent, une liste de noms peut être présentée en réponse à l'utilisateur. Cette liste des noms peut être organisée et triée en fonction des conditions d'utilisation précédemment décrites. L'ambiguïté est levée lorsque la sélection de l'un des noms de cette liste est renvoyé au serveur. Cette sélection dans une liste peut s'effectuer par tout moyen propre à chaque terminal.

L'utilisateur peut se voir proposer, par un mécanisme dit de saisie prédictive, un certain nombre de noms de Services ou de paramètres, alors que la saisie n'en est que partielle, par comparaison des signes entrés au fur et à mesure avec les noms des Services ou les paramètres contenus soit dans un dictionnaire constitué de l'historique des Services précédemment accédé ou des paramètres précédemment entrés, soit dans un ou plusieurs dictionnaire(s) contenant une liste prédéfinie de Service ou de paramètres. Ces dictionnaires peuvent être téléchargés dans le terminal pour améliorer la réactivité du système, totalement ou seulement partiellement, préalablement à l'utilisation de l'invention ou bien chaque fois qu'une mise à jour s'impose.

Quel que soit le mode de saisie, une fois le nom du Service et les éventuels paramètres qui y sont attachés déterminés, l'utilisateur est automatiquement redirigé vers le site Internet correspondant, grâce à l'enregistrement, au sein des dictionnaires, des adresses Internet complètes de chaque Service. Il est possible, pour un même Service, de rediriger les utilisateurs vers différentes adresses Internet, en fonction des conditions d'utilisation précédemment décrites.

L'interrogation de la ou des base(s) de données distante(s) peut s'effectuer sur un ou plusieurs serveur(s) distinct(s), contenant un extrait de cette base, situé éventuellement sur le même réseau local que le site hébergeant la zone de saisie, dans le but d'améliorer la performance et la fiabilité du système.

## Revendications

1. Dispositif destiné à simplifier l'accès à un Service Internet, ainsi que son utilisation, depuis un terminal ne disposant pas d'un clavier alphanumérique complet,
où le dispositif permet d'identifier un Service Internet à partir de la saisie d'un nom ou bien de la séquence formée par la série d'un appui par touche pour chaque lettre du nom utilisé, puis de rediriger l'utilisateur vers l'adresse Internet correspondante, et
où la détermination du Service Internet à accéder est effectuée par comparaison sur un serveur distant et au sein d'une ou plusieurs bases de données, du nom ou de la séquence saisie par l'utilisateur avec le nom ou la séquence des Services référencés, au sein d'un ou plusieurs groupes, dénommés Dictionnaires,
ce dispositif **caractérisé en ce**
**qu'**une liste de noms est retournée en réponse à l'utilisateur, si plusieurs réponses correspondent au nom ou à la séquence saisis par l'utilisateur, la sélection de l'un des items de la liste permettant de lever l'ambiguïté, et
**que** les conditions d'utilisation suivantes sont prises en compte pour déterminer le choix et l'ordre des dictionnaires de services référencés, l'ordre ou l'organisation de la liste de noms retournée à l'utilisateur, l'adresse Internet correspondant au service identifié et d'éventuels paramètres transmis à celui-ci: localisation géographique de l'utilisateur, langue utilisée, modèle et constructeur du terminal utilisé, langages informatiques et standards compatibles avec le terminal, fournisseur par lequel s'effectue l'accès à Internet, Portail Internet sur lequel se situe l'utilisateur au moment de la requête.

2. Dispositif destiné à simplifier l'accès à un Service Internet, ainsi que son utilisation, depuis un terminal ne disposant pas d'un clavier alphanumérique complet,
où le dispositif permet d'identifier un Service Internet à partir de la saisie d'un nom ou bien de la séquence formée par la série d'un appui par touche pour chaque lettre du nom utilisé, puis de rediriger l'utilisateur vers l'adresse Internet correspondante, et
permet de saisir un certain nombre de paramètres consécutivement à la saisie du nom du Service à accéder et préalablement à l'accès au site Internet correspondant, les paramètres saisis étant transmis à celui-ci ou bien permettant d'accéder à une sous-partie spécifique du site en question,
ce dispositif **caractérisé en ce**
**que** l'utilisateur se voit proposer, par un mécanisme dit de saisie prédictive, un certain nombre de noms de Services ou de paramètres, alors que la saisie n'en est que partielle, par comparaison des signes entrés au fur et à mesure avec les noms des Services ou les paramètres contenus dans un ou plusieurs dictionnaires, et que ce ou ces dictionnaires sont constitués soit de l'historique des Services précédemment accédés ou des paramètres précédemment entrés, soit d'une liste prédéfinie de Services ou de paramètres, et sont téléchargés dans le terminal pour améliorer la réactivité du système, totalement ou seulement partiellement, préalablement à l'utilisation du dispositif ou bien chaque fois qu'une mise à jour s'impose.

3. Dispositif selon la revendication 1 et 2 tel que la saisie peut être effectuée soit sur un clavier physique, soit sur un clavier affiché sur un écran tactile, dont la disposition des touches ainsi que la répartition des lettres par touche peuvent varier en fonction des terminaux, et notamment être effectuées en fonction d'une estimation de la fréquence d'utilisation des lettres dans les noms de Services.

4. Dispositif selon la revendication 1 tel que l'interrogation de la ou des base(s) de données distante(s) peut s'effectuer sur un ou plusieurs serveur(s) distinct(s), contenant un extrait de cette base, situés éventuellement sur le même réseau local que le site hébergeant la zone de saisie, dans le but d'améliorer la performance et la fiabilité du système.

## Patentansprüche

1. Vorrichtung zur Vereinfachung des Zugriffs auf einen Internetservice, sowie seiner Benutzung, aus einem keine vollständige alphanumerische Tastatur besitzenden Endgerät, wobei die Vorrichtung aus der Eingabe eines Namen oder einer aus einer Reihe von einem Tastenanschlag für jeden Buchstaben des benutzten Namens gebildeten Sequenz die Identifizierung eines Internetservices und dann die Weiterleitung des Benutzers zur entsprechenden Internetadresse ermöglicht,
wobei die Bestimmung des Internetservices, auf den zugegriffen werden soll, durch Vergleich, auf einem entfernten Server und innerhalb einer oder mehrerer Datenbanken, eines vom Benutzer eingegebenen Namens oder Sequenz mit dem Namen oder der Sequenz der referenzierten Services im Rahmen einer oder mehrerer Gruppen, genannt Wörterbücher, erfolgt,
wobei diese Vorrichtung **dadurch gekennzeichnet ist, dass**
eine Liste von Namen als Antwort zum Benutzer zurückgeschickt wird, falls mehrere Antworten dem vom Benutzer eingegebenen Namen oder Sequenz entsprechen, wobei die Auswahl des einen der Elemente der Liste die Behebung der Mehrdeutigkeit ermöglicht, und dass
die folgenden Benutzungsbedingungen zur Bestimmung der Auswahl und der Anordnung der Wörterbücher der referenzierten Services, der Anordnung oder des Aufbaus der dem Benutzer zurückgeschickten Namensliste, der dem identifizierten Service entsprechenden Internetadresse und der etwaigen zu dieser Letzteren übertragenen Parameter berücksichtigt werden: geographische Benutzerlokalisierung, benutzte Sprache, Modell und Hersteller des benutzten Endgeräts, mit dem Endgerät kompatible Computersprachen und Standards, den Internetzugang bereitstellender Anbieter, Internet-Portal, auf dem der Benutzer sich im Zeitpunkt der Abfrage befindet.

2. Vorrichtung zur Vereinfachung des Zugriffs auf einen Internetservice, sowie seiner Benutzung, aus einem keine vollständige alphanumerische Tastatur besitzenden Endgerät, wobei die Vorrichtung aus der Eingabe eines Namens oder einer aus einer Reihe von einem Tastenanschlag für jeden Buchstaben des benutzten Namens gebildeten Sequenz die Identifizierung eines Internetservices und dann die Weiterleitung des Benutzers zur entsprechenden Internetadresse ermöglicht, und die Eingabe einer bestimmten Anzahl von Parametern nach der Eingabe des Namens des Service, auf den zugegriffen werden soll, und vor dem Zugriff auf die entsprechende Internetseite ermöglicht, wobei diese eingegebenen Parameter zu dieser Letzteren übertragen werden oder den Zugriff auf einen speziellen Unterteil der Seite ermöglichen,
wobei diese Vorrichtung **dadurch gekennzeichnet ist, dass**
dem Benutzer durch einen sogenannten voraussagenden Eingabemechanismus eine bestimmte Anzahl von Servicenamen oder Parametern trotz derer nur partieller Eingabe durch den Vergleich der im Laufe eingegebenen Zeichen mit den in einem oder mehreren Wörterbüchern enthaltenen Servicenamen oder Parametern angeboten wird, und dass
diese Wörterbücher entweder aus dem Verlauf der vorherigen zugegriffenen Services oder der vorherigen angegebenen Parameter, oder aus einer vordefinierten Liste von Services oder Parameter bestehen, und dass sie vollständig oder nur teilweise vor der Benutzung der Vorrichtung oder jedes Mal, wenn eine Aktualisierung benötigt wird, zur Verbesserung der Reaktionsfähigkeit des Systems in das Endgerät heruntergeladen werden.

3. Vorrichtung gemäß Anspruch 1 und 2 **dadurch gekennzeichnet, dass** die Eingabe entweder auf einer physischen Tastatur oder auf einer auf einem Berührungsbildschirm dargestellten Tastatur erfolgen kann, deren Tastenanordnung sowie Buchstabenverteilung per Taste je nach Endgerät variieren und insbesondere abhängig von einer Abschätzung der Benutzungsfrequenz der Buchstaben in den Servicenamen durchgeführt werden kann.

4. Vorrichtung gemäß Anspruch 1 **dadurch gekennzeichnet, dass** die Abfrage der entfernten Datenbank(en) auf einem oder mehreren einen Auszug aus dieser Bank umfassenden getrennten Server, die sich eventuell auf dem gleichen lokalen Netz wie die die Eingabezone unterbringende Seite befinden, zur Verbesserung der Leistung und der Zuverlässigkeit des Systems durchgeführt werden kann.

## Claims

1. A device intended to simplify the access to an Internet Service, as well as its usage, from a terminal not having a full alphanumeric keyboard, wherein the device allows to identify an Internet Service upon entering a name or the sequence formed by the series of one keystroke for each letter of the used name, and to redirect the user to the corresponding internet address, and
wherein the determination of the Internet Service to be accessed is performed by comparing, on a remote server and within one or more databases, the name or the sequence entered by the user with the name or the sequence of referenced Services, within one or more groups, called Dictionaries,
this device being **characterized in that**
a list of names is returned as a response to the user, if several responses correspond to the name or the sequence entered by the user, the selection of one of the items of the list allowing to disambiguate, and
the following operating conditions are taken into account in determining the choice and the order of the dictionaries of the referenced services, the order or the organization of the list of names returned to the user, the Internet address corresponding to the identified service and any potential parameters passed to this one: geographic location of the user, used language, model and manufacturer of the used terminal, computer languages and standards compatible with the terminal, provider performing the Internet access, the Internet Portal on which the user is located at the time of the request.

2. A device intended to simplify the access to an Internet Service, as well as its usage, from a terminal not having a full alphanumeric keyboard, wherein the device allows to identify an Internet Service upon entering a name or the sequence formed by the series of one keystroke for each letter of the used name, and then to redirect the user to the corresponding internet address, and,
allows to enter a certain amount of parameters following entering the name of the Service to access and before accessing the corresponding Internet site, the entered parameters being passed to this one or allowing to access a specific subpart of the said site,
this device being **characterized in that**
to the user is proposed, by a so-called predictive mechanism, a certain amount of names of Services or parameters, while the entry is only partial, by comparing the successively inputted signs with the names of the Services or with the parameters contained in one or more dictionaries, and
these dictionaries are made up of either the history of the previously accessed Services or the previously inputted parameters, or of a predefined list of Services or parameters, and are completely or only partially downloaded into the terminal in order to improve the system reactivity, prior to the use of the device or every time that an update is required.

3. A device according to claim 1 or 2, wherein the entering
can be performed either on a physical keyboard, or on a keyboard displayed on a touch screen, the layout of the keys as well as the distribution of letters per key of which can vary depending on the terminals, and in particular can be performed depending on an estimate of the frequency of use of letters in the names of the Services.

4. A device according to claim 1, wherein the query of the remote database(s) can be performed on one or many separate server(s), containing an abstract of this database, which are potentially located on the same local network as the site hosting the entry location, in order to improve the performance and reliability of the system.
